Europäisches Patentamt

European Patent Office

Office européen des brevets

(11) Publication number: **0 259 910**
**A1**

# (12) EUROPEAN PATENT APPLICATION

(21) Application number: **87201552.4**

(22) Date of filing: **17.08.87**

(51) Int. Cl.4: **A01K 1/015** , **A01K 1/02**

(30) Priority: **26.08.86 NL 8602158**

(43) Date of publication of application:
**16.03.88 Bulletin 88/11**

(84) Designated Contracting States:
**AT BE CH DE ES FR GB GR IT LI LU NL SE**

(71) Applicant: **Nooyen, Antonius Maria Aloysius**
**Kanveldweg 5**
**NL-5754 PM Deurne(NL)**

(72) Inventor: **Nooyen, Antonius Maria Aloysius**
**Kanveldweg 5**
**NL-5754 PM Deurne(NL)**

(74) Representative: **Noz, Franciscus Xaverius, Ir.**
**et al**
**Algemeen Octrooibureau P.O. Box 645**
**NL-5600 AP Eindhoven(NL)**

(54) **Grate floor for a stable.**

(57) Metal grate floor having a closed part of which the temperature can be regulated, which closed part has at the lower side a system of tubes for a fluidum, characterized in that the closed part has at least at two sides being opposite to each other a grate construction.

*FIG.1.*

**EP 0 259 910 A1**

## Grate floor for a stable.

The invention relates to a metal grate floor having a closed part of which the temperature can be regulated and a grate part, in which the closed part has at the lower side a tube system for a fluidum.

Such a self-carrying grate floor having a closed plate part is known from Dutch patent application 8300534. The metal grate floor having a heatable part as disclosed in that patent application, can be used in practice with a good result in a stable of e.g. a pigsty. The plate has been placed in a corner of the floor and can be heated at the lower side of the plate with a fluidum, and, if desired, for further heating of the plate a lamp can be placed, so that for the piglings a pleasant, heated place to lie on can be obtained with a closed surface. The sow is on the relatively cool grate. Because of the fact that piglings mostly are together on the heated place where they lie, there is hardly no chance that they can be damaged because of being pressed by unexpected movements of the sow. It also appeared that piglings do not soil the plate because the piglings go to the grate part being opposite the plate. Such a floor construction as described in Dutch patent application 8300534 also can be indicated as lying in sty.

After some weeks the piglings have been grown so far that they push aside each other on the heated plate and then they must be removed from the lying in sty and be placed in a so called pig sty.

From measures and observations it appeared that such a pig sty needs to fulfill different requirements than the as such known lie in sty as described in Dutch patent application 8300534, especially because soiling the plate has to be avoided or to be minimized. Especially in summer times it can be desired that the plate need not be heated but can be cooled. In connection with these objects, a new metal grate floor has been developed as disclosed in the preamble and it has been improved, which new metal grate floor is characterized by the fact that the closed part is surrounded at at least two opposide parts with a grate construction. It is preferred that the closed part is at three sides surrounded by a grate construction. According to an other preference according to the invention, the plate part has been constructed spherically, so that soil that possibly is on the plate part of which the temperature can be regulated, can run to the outer side into the grate part or can be removed from the plate part by rinsing.

According to a further preference there has been made a profile in the metal grate floor rising or lowering the bars at the place where the plate is near to the grate part, so that pigs and the sow can help to rise by pushing them away from the higher part of the profile. Such a construction with a difference in the height is as such known from Dutch patent application 8401516.

In a floor construction having a metal grate floor for a pig sty, it is preferred that the plate part is 20-50% of the total floor surface.

The invention is further clarified with the following description, in which it is referred to the added drawing, in which:

fig. 1 refers to a metal grate floor according to the invention in which the closed plate part has been made in the full width between two grate parts,

fig. 2 refers to a part of a metal grate floor according to the invention in which besides the closed plate part a further grate part is present, and

fig. 3 is a bigger part of the metal grate floor in which the parts as indicated in figs. 1 and 2 have been brought together.

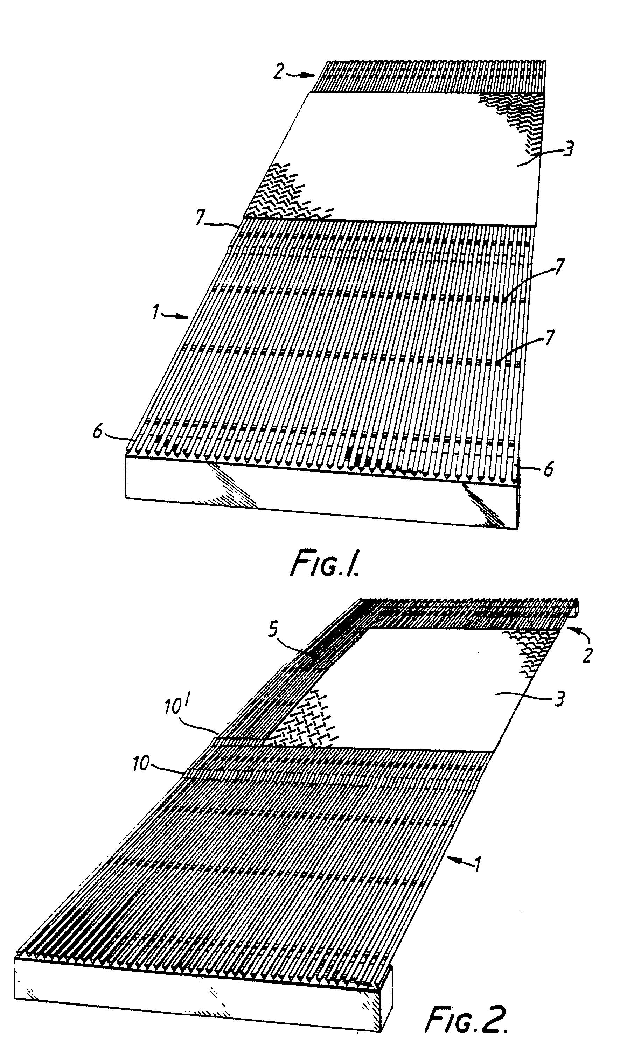

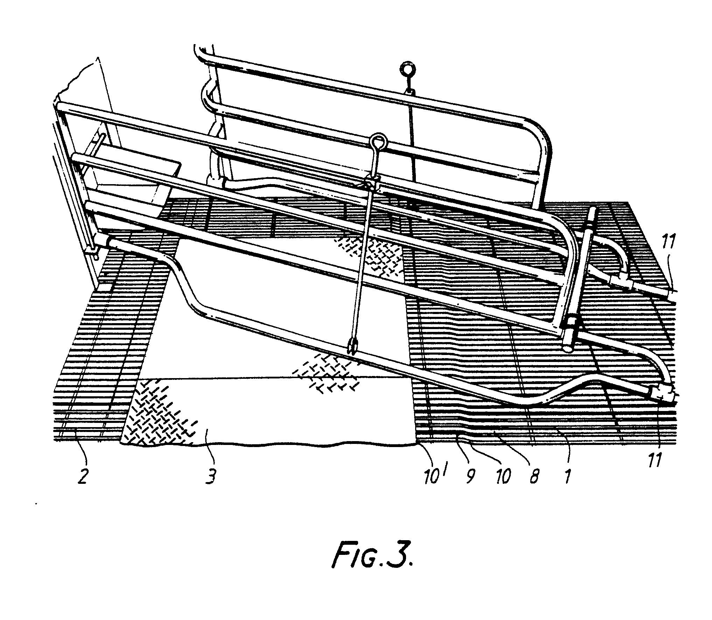

In fig. 1 a part for the metal grate floor has been indicated in which grate part 1 is build up from bars 6 preferably having a profile of a triangle, connected to each other with cross bars 7. Close to the grate part 1 a plate part 3 has been constructed over the full width of the grate and then a smaller grate part 2 has been made also over the full width of the grate. The function of this last grate part 2 is to easily remove the possible polluting substances such as manure from the plate part 3 that can be heated or cooled. Preferably the plate part 3 has been constructed lichtly spherical, in order to remove easily the waste from the plate part 3 or to rinse it with water. The manure or the liquid then comes through the grate parts 1 and 2 into a pit constructed in the stable under the grate. The side of the grate floor, so at all event the first and last grate unit of a floor, is formed by an element as indicated in fig. 2, and at one side along the plate a grate element 5 has been supplied, so that the manure or the rinsing liquid can run from the plate and can be collected in the pit under the grate. A floor according to the invention is mostly formed in a stable by more units as indicated in fig. 1 besides each other, possibly alternated and at the outer side completed by units as indicated in fig. 2. In this way a floor construction then is obtained according to fig. 3. In this figure one also indicated partitions 11 in the form of tubes, placed diagonally between the several sties, so that in each sty a sow and more piglings can be placed. In fig. 3 the profile 10 and 10' has been indicated clearly as an elevation made in the grate and in the place where the grate comes to the plate part, so that the bars 8 are lower than the bars 9 while further plate 3 is a bit higher than the bars 9. In this way a floor has been obtained having several places where the animals can push them away from the rim of the profile when they are raising from a lying situation, so that the danger of slipping away is decreased.

Preferably the floor element as indicated in fig. 2 has a length of 2-2.5 m and a width of about 85 cm. The grate part 5 has a width of about 20 cm and the grate part 2 has a length of about 30 cm.

Heating and cooling of the plate part 3 can be carried out in a way as disclosed in Dutch patent application 8300534, and therefore under the plate part one made devices through which a tube can be supplied and through these tubes it is possible to add the heating or cooling fluidum. With the present construction it is possible in one stable to heat one part of the floor, probably being the place for the piglings and to cool an other part of the floor, being the place for the sow.

With the parts for the metal grate floor and the metal grate floor itself as it has been indicated in fig. 3 it has again been possible to further improve the stables for animals, especially for a pig sty and it has been possible to improve the circumstances for the animals to live as well as the hygienic situation in the stables.

## Claims

1. Metal grate floor having a closed part of which the temperature can be regulated, which closed part has at the lower side a system of tubes for a fluidum, characterized in that the closed part has at least at two sides being opposite to each other a grate construction.

2. Metal grate floor according to claim 1, characterized in that the closed part is surrounded at three sides by a grate construction.

3. Metal grate floor according to claims 1-2, characterized in that the plate part in or between the grate construction has been made slightly spherical.

4. Metal grate floor according to claims 1-3, characterized in that at the place where the plate is near to the grate part, a profile has been made in the floor.

5. Metal grate floor according to claims 1-4, characterized in that the plate part is 20-50% of the total floor surface.

FIG.1.

FIG.2.

FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 118 139 (NOOYEN) * page 3, lines 1-18; figure 1 * & NL-A-83 00 534 (Cat. D) | 1 | A 01 K 1/015 A 01 K 1/02 |
| A | | 5 | |
| | --- | | |
| Y | EP-A-0 161 717 (NOOYEN) * Page 2, line 23 - page 3, line 34; figure 2 * & NL-A-84 01 516 (Cat. D) | 1 | |
| A | | 3,5 | |
| | --- | | |
| A | US-A-4 294 195 (RODENBERG) ----- | 3,5 | |

TECHNICAL FIELDS SEARCHED (Int. Cl.4)

A 01 K

The present search report has been drawn up for all claims

| Place of search | Date of completion of the search | Examiner |
|---|---|---|
| THE HAGUE | 10-12-1987 | VILBIG K |